# EUROPÄISCHE PATENTSCHRIFT

(11) **EP 1 678 027 B1**
(45) Veröffentlichungstag und Bekanntmachung des Hinweises auf die Patenterteilung: **30.07.2008**
(21) Anmeldenummer: 04790885.0
(22) Anmeldetag: 26.10.2004
(51) Int. Cl.: B62D 25/08, B62D 21/15

(54) **TRÄGERSTRUKTUR FÜR EIN FAHRZEUG**
SUPPORT STRUCTURE FOR A VEHICLE
STRUCTURE DE SUPPORT CONÇUE POUR UN VEHICULE

(30) Priorität: 31.10.2003 DE 10351270
(43) Veröffentlichungstag der Anmeldung: 12.07.2006
(73) Patentinhaber: PEGUFORM GMBH, 79268 Bötzingen (DE)
(72) Erfinder: BREISACHER, Michael, 79353 Bahlingen (DE); RINDERLIN, Jürgen, 79279 Vörstetten (DE)
(74) Vertreter: Neunert, Peter Andreas
(86) Internationale Anmeldenummer: PCT/EP2004/012103
(87) Internationale Veröffentlichungsnummer: WO 2005/042337

(56) Entgegenhaltungen:
- EP-A- 0 798 197
- DE-A- 10 040 673
- DE-A- 19 810 864
- US-A- 5 385 212
- PATENT ABSTRACTS OF JAPAN Bd. 2003, Nr. 12, 5. Dezember 2003 (2003-12-05) -& JP 2003 306168 A (TOYOTA AUTO BODY CO LTD), 28. Oktober 2003 (2003-10-28)

## Beschreibung

Die Erfindung betrifft die Ausgestaltung der tragenden Teile der Frontstruktur eines Fahrzeugs, um die Anforderungen an den Fußgängerschutz bei gleichzeitiger Erfüllung der Anforderungen derselben Frontstruktur an die Steifigkeit, um ausreichende Sicherheit für die Fahrzeuginsassen im Fall eines Aufpralls zu gewährleisten.

Aus der DE 199 44 670 A1 ist eine Front- Stossfängeranordnung bekannt, die für den Fußgängerschutz ausgelegt ist. Die vorgeschlagene Lösung ist für die Erreichung einer hohen Steifigkeit der Stossfängeranordnung im Offroadbetrieb des Fahrzeugs ausgelegt und soll gleichzeitig den Anforderungen an die Energieabsorbtion genügen, die für den Fußgängerschutz erforderlich sind. Die vorgeschlagene Lösung beinhaltet eine demontierbare Abdeckung, welche im Offroadbetrieb für die notwendige Steifigkeit sorgt. Die Lösung ist für den Fußgängeraufprall im Knie- oder Unterschenkelbereich interessant. Wenn der Aufprall aber im Hüftbereich erfolgt, würde der Fußgänger auf die Motorhaube und den die darunter liegende Frontstruktur auftreffen, deren mechanische Eigenschaften von der in der DE199 44 670 A1 offenbarten Lösung nicht in irgendeiner Weise angesprochen werden. Ähnliche Frontstrukturen sind z. B. in DE 197 15 874 A1, DE 198 10 864 A1 und EP 0 798 197 A1 bekannt.

Als weiterer Stand der Technik ist eine Frontendstruktur in Hybridbauweise aus US2002/001780 A1 bekannt. Die Frontendstruktur enthält eine Verstärkung aus Fasermaterial oder als Stahlkabel, wobei eine Erhöhung der Festigkeit der Frontendstruktur erzielt wird. Allerdings gibt es keinen Hinweis dass diese Verstärkung, welche als integraler Bestandteil der Frontendstruktur ausgebildet ist, energieabsorbierende Eigenschaften aufweist. Da ausdrücklich auf eine Verstärkung abgestellt ist, handelt es sich in diesem Fall nicht um eine Lösung, welche für die Erfüllung der Anforderungen aus dem Fußgängerschutz in Betracht zu ziehen ist.

Die Erfüllung der Anforderungen an den Fußgängerschutz infolge eines Hüftaufpralls erfordert energieabsorbierende Eigenschaften der Frontstruktur, während die Schlossausreißkraft im allgemeinen hohe Anforderungen an die Steifigkeit der Frontstruktur stellt.

Um ein Ausklinken des Haubenhakens aus dem Schloss zu verhindern, muss die Frontstruktur, also der Frontendträger in Zugrichtung (Biegung nach oben) sehr steif ausgelegt werden.

Im Gegensatz dazu muss der gleiche Bereich beim Aufprall der Fußgängerhüfte auf Druck (Biegung nach unten) sehr weich gestaltet sein, um die Verletzungsgefahr zu minimieren.

Zusätzlich zu den Anforderungen an den Fußgängerschutz infolge eines Hüftaufpralls ist es erforderlich, dass der Frontendträger während des High-Speed-Crashs sehr hohe Zugbelastungen aufnehmen muss, um die Integrität des Vorderwagens zu wahren. Dies resultiert häufig in steifen Trägerstrukturen, welche der Anforderung beim Hüftaufprall widersprechen.

Die Struktur des KFZ-Vorderwagens wird durch druckentlastete Zugstäbe so ausgelegt, dass einander widersprechende Steifigkeitsanforderungen trotzdem erreicht werden können, so wird es z.B. möglich, ein Bauteil auf Zugbeanspruchung steif auszulegen und dasselbe Bauteil in entgegengesetzter Richtung, also bei Beanspruchung auf Druck, sehr weich zu gestalten.

In der JP 2003 306168 A1 wird eine Forderwagenstruktur beschrieben, mit einem oberen und einem unteren Querträger, zwischen denen eine vertikale Stützstrebe angeordnet ist. Diese Stützstrebe weist einen Biegeabschnitt auf, der sich im Falle eines Zusammenpralls mit einem Fußgänger nach unten verbiegt und damit die auf den Fußgänger einwirkende Kraft abmildert.

In der EP 0 798 197 A1 wird ein Frontmodul für Kraftfahrzeuge beschrieben, mit jeweils einem unteren und einem oberen Querträger, wobei die beiden Querträger einen biegesteifen Verbund miteinander bilden, bei dem zusätzlich biegesteifbefestigte Druckstreben und Zugstreben zwischen den beiden Querträgern angeordnet sind.

Aus der DE 198 10 864 A1 ist ein Frontmodul bekannt, bei dem die Längsträger der Fahrzeugkarosserie durch ein Zugband miteinander verbunden sind, wodurch verhindert wird, dass bei einem Frontalzusammenprall die gegenüberliegenden Längsträger seitlich ausbiegen.

Dem Stand der Technik ist keine Kfz-Vorderwagenstruktur zu entnehmen, die in Abhängigkeit von der Belastungsrichtung konträr reagiert und für eine Zugbeanspruchung sehr steif ausgelegt ist, während sie einer Druckbeanspruchung keinen nennenswerten Widerstand entgegensetzt.

Es ist Aufgabe der Erfindung, ein Konzept zur Erzielung unterschiedlicher Steifigkeiten einer Kfz-Vorderwagenstruktur in Abhängigkeit von der Belastungsrichtung zur Erfüllung von Fußgängerschutz-, Steifigkeits- und Highspeed-Crash-Anforderungen zu realisieren. Dabei ist eine ausreichende Steifigkeit zu gewährleisten, damit die Schlossausreißkraft nicht unter den erforderlichen Wert absinkt, aber der Fußgängerschutz, insbesondere bei Hüftaufprall, gewährleistet ist. Durch Einbringung eines ganz, oder teilweise in Zugrichtung liegenden Zugelements, wie eines Zugstabes, wird die beschriebene Zugbelastung aufgenommen. Der geometrische Aufbau des Zugelements, welches als Draht, Band, Seil, Kette, Faserstrang, Gewebeband, Knickstab, einseitig eingreifende Verrastung, Kühlmodul mit entsprechend integrierter Funktion oder dergleichen ausgestaltet sein kann, und dessen Querschnittswerte sind so gewählt, dass es unter Druckbelastung ausweicht bzw. der Druckkraft keinen nennenswerten Widerstand entgegen setzt. Alternativ dazu verschieben sich Zugelemente gegeneinander oder knicken aus, sodass der Druckbelastung durch den Zugstab ein im Vergleich zur Zugbelastung niedrigerer Widerstand entgegengesetzt wird.

Nach dem vorgehend beschriebenen Prinzip wird somit gewährleistet, dass die Zugbelastungen aufgenommen werden, während der dazu eingebrachte Zugstab auf Biegung sehr weich ist.
Fig. 1 stellt eine unbelastete Frontstruktur nach einem ersten Ausführungsbeispiel dar
Fig. 2 stellt eine unbelastete Frontstruktur nach einem zweiten Ausführungsbeispiel dar
Fig. 3 stellt eine unbelastete Frontstruktur als Vergleichsbeispiel dar
Fig. 4 stellt eine unbelastete Frontstruktur als Vergleichsbeispiel dar
Fig. 5 stellt eine unbelastete Frontstruktur nach einem dritten Ausführungsbeispiel dar
Fig. 6 stellt eine unbelastete Frontstruktur als Vergleichsbeispiel dar

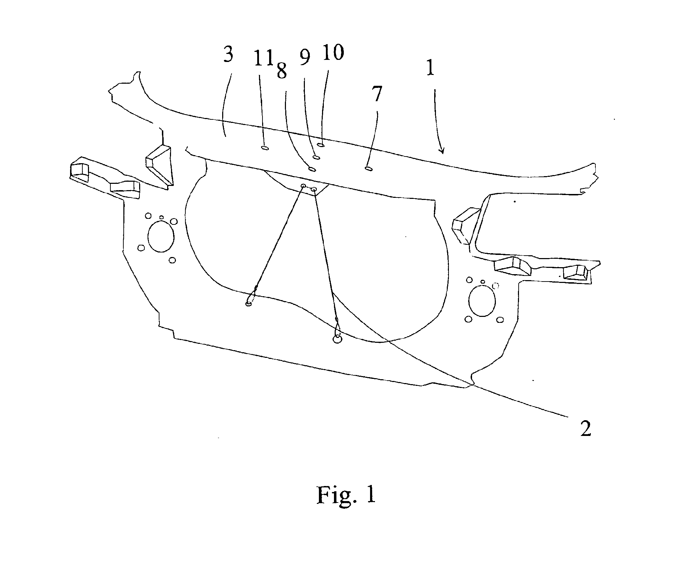

Fig. 1 stellt eine Frontstruktur eines Fahrzeugs dar. Eine derartige Frontstruktur ist der tragende Bestandteil für Einbauten im Frontbereich eines Fahrzeugs, wie beispielsweise Scheinwerfern, Kühlergrill, Zierelementen, Stossfängern, Frontspoilern. Die Frontstruktur kann als ein Metallbauteil, ein Kunststoffbauteil oder Hybridbauteil ausgebildet sein und muss eine genügend große Steifigkeit aufweisen, um den normalen Betriebsbedingungen des Fahrzeugs verformungsfrei stand halten zu können. Die durch den Betrieb des Fahrzeugs auf die Frontstruktur wirkenden Kräfte umfassen Windkräfte, Gewichtskräfte der Einbauten, Kräfte aus dem meist in der Frontstruktur angebrachten Verschlussmechanismus der vordemeitigen Fahrzeugabdeckung. Gleichzeitig soll dieselbe Frontstruktur im Fall eines Aufpralls des Fahrzeugs auf ein Objekt energieabsorbierende Eigenschaften entwickeln und insbesondere im Rahmen des Fußgängerschutzes einen Aufprall so abzufangen, dass die Verletzungsgefahr auf ein Minimum reduziert wird. Die Erfüllung der Forderungen nach energieabsorbierenden Eigenschaften für die Frontstruktur wird im allgemeinen durch den Einbau von energieabsorbierenden Elementen, so genannten Crashabsorbem, erfüllt, welche nicht Gegenstand dieser Erfindung sein sollen. Energieabsorbierende Elemente sind einerseits direkt an den Stossfängem oder Stossfängerverkleidungen vorgesehen oder als elastische Zwischenschicht zwischen Stossfänger und Längs- oder Querträgern angebracht. Zusätzlich oder alternativ dazu enthalten die Längsträger faltbare Elemente, welche einen Aufprall des Fahrzeugs bei höheren Geschwindigkeiten dämpfen. In allen Fällen verläuft die Hauptkraftrichtung horizontal entgegen der Fahrtrichtung oder zumindest schräg der Fahrtrichtung. Der Effekt dieser Kraft aus dem Aufprall auf die Frontstruktur ist vergleichbar mit der Wirkung einer Kraft auf einen Biegeträger. Zumindest der obere Bereich 3 dieses Biegeträgers wird einem Biegemoment ausgesetzt, welches als Zugspannung auf einen Teil des Querschnittes des Biegeträgers wirkt. Durch Einbringung eines ganz, oder teilweise in Zugrichtung liegenden Zugelements wird die beschriebene Zugspannung oder Zugbelastung aufgenommen.

Die mögliche Lage der Zugelemente ist abhängig von der gewählten Konstruktion der Frontstruktur. Grundsätzlich erfolgt eine Versteifung gegenüber Zugbelastung bei im wesentlichen horizontalen Einbau des Zugelements. Oder mit anderen Worten bewirkt das Zugelement eine Erhöhung der Zugsteifigkeit, das heißt, die durch das Bauteil aufzunehmende Zugkraft erhöht sich gegenüber dem unverstärkten oberen Bereich der Frontstruktur.

Soll eine vertikale Zugbelastung ebenfalls in Betracht gezogen werden, werden die Zugelemente 2 in im wesentlichen vertikaler Richtung angeordnet. Eine Steifigkeit gegenüber vertikal gerichteten Zugkräften ist erforderlich, wenn die Frontstruktur über eine Schließverbindung für eine Fahrzeugabdeckung, wie ein Haubenschloss für eine Motorhaube verfügt.

Der geometrische Aufbau des Zugelements 2 ist beispielsweise in folgenden Ausführungen vorstellbar, aber nicht auf diese beschränkt: Draht, Band, Seil, Kette, Faserstrang, Gewebeband, Knickstab, einseitig eingreifende Verrastung.

Die Querschnittswerte sind so gewählt, dass das Zugelement unter der beim Hüftaufprall auftretenden Druckbelastung ausweicht. Dieses Ausweichen erfolgt insbesondere bei Drähten, Bändern, Seilen, Ketten, Fasersträngen oder Gewebebändern oder ähnlichen Zugelementen ohne eigene Biegesteifigkeit. In einer Ausführung des Zugelements als Zugstab, welcher aus einzelnen Elementen besteht, verschieben sich die einzelnen Elemente gegeneinander. Diese Ausführung kann beispielsweise einen Zugstab umfassen, der aus mehreren, teleskopartig ineinander verschiebbaren Elementen unterschiedlichen Querschnitts besteht. In einer anderen Ausführung enthält der biegesteife Zugstab Knickstellen, welche ein definiertes Ausknicken an diesen dafür vorgesehenen Knickstellen bewirken. Der Druckbelastung wird somit durch das Zugelement oder den Zugstab ein im Vergleich zur Zugbelastung niedrigerer Widerstand entgegengesetzt.

Die Funktion des Systems ist zunächst nicht an die Verwendung bestimmter Materialien gekoppelt, um Gewicht und Bauraum niedrig zu halten, allerdings sind jedoch speziell bei Verwendung von Seilen, Drähten, Ketten, Fasersträngen und Gewebebändern Materialien mit höherem E-Modul im Vergleich zum Material der Frontstruktur sinnvoll. Im speziellen sind hierbei die Materialien Stahl, Aluminium und

Metalle im Allgemeinen, Glasfasern, Kohlefasern, Aramidfasern, sonstige organische Fasern, z.B. Spinnenproteinfasern etc. zu nennen.

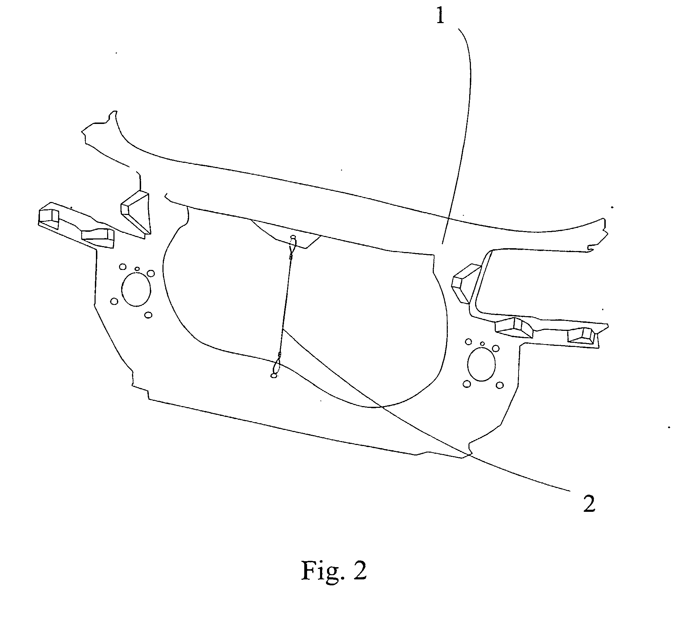

Fig. 2 stellt eine unbelastete Frontstruktur nach einem zweiten Ausführungsbeispiel dar Wie im ersten Ausführungsbeispiel ist das Zugelement als biegeschlaffes Zugseil oder dergleichen ausgebildet.

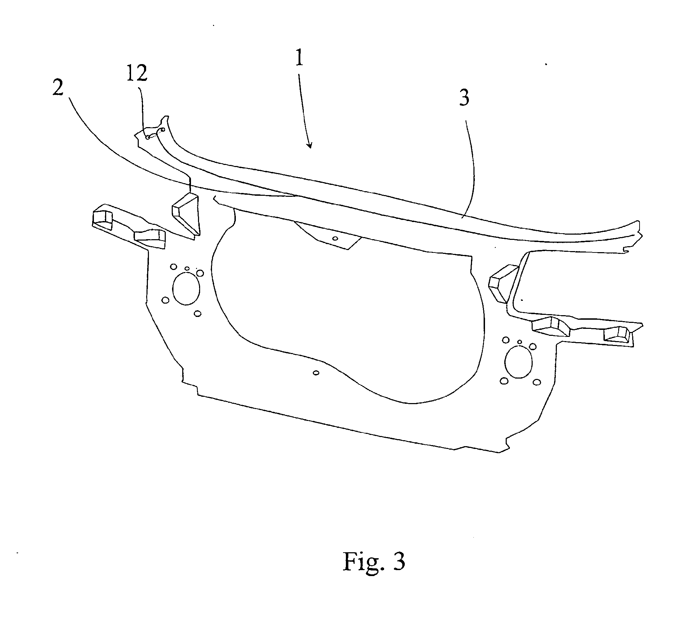

Um eine sichere Krafteinleitung zu gewährleisten, wird das Zugelement an den Verbindungspunkten zur Frontstruktur und/oder zur Karosserie formschlüssig mit den jeweiligen Befestigungselementen verbunden. Dies kann bei Verwendung von Seilen, oder Drähten, z.B. durch Umschlingen des Schraubpunktes erfolgen. Insbesondere kommt diese Ausführungsform in der in Fig. 3 dargestellten Variante zum Einsatz.

Fig. 3 stellt eine unbelastete Frontstruktur nach einem Vergleichsbeispiel dar Diese Frontstruktur ist mit einem Zugelement versehen, welches in den oberen Bereich der Frontstruktur integriert ist.

Die Befestigung des Zugelements kann in einer ersten Ausführungsform durch Einbringung desselben während des Herstellungsprozesses der Frontstruktur erfolgen. Das Zugelement wird z.B. vollständig, oder teilweise umspritzt, oder umpresst, wenn die Frontstruktur zumindest teilweise aus Kunststoff besteht.

Alternativ dazu bietet sich eine separate Montage des Zugelements an, insbesondere wenn die Frontstruktur aus einem metallischen Werkstoff, wie Stahl oder Magnesium besteht.

Das Zugelement wird als separates Bauteil mit der Frontstruktur 1 verbunden, wobei beispielsweise nachfolgende Verfahren zum Einsatz kommen können: schrauben, clipsen, klemmen, kleben, schweißen, heißumformen, nieten.

Die schon erwähnte Umschlingung des Schraubpunktes erfolgt im oberen Endbereich der Frontstruktur. Das biegeschlaffe Zugelement 2 wird durch mindestens 2 Öffnungen 12 geführt und darin befestigt.

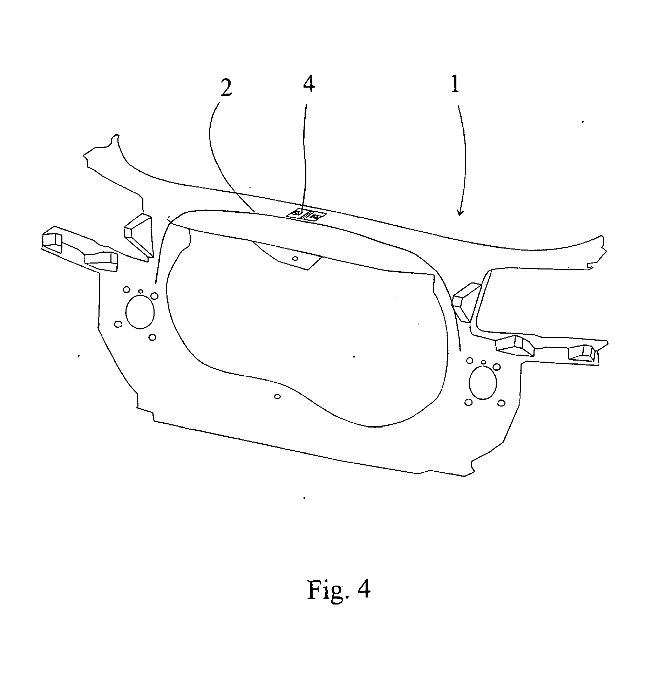

Fig. 4 stellt eine unbelastete Frontstruktur nach einem zweiten Versgleichsbeispiel dar. Nach diesem Beispiel wird ein Zugelement 2 zwar ebenfalls in den oberen Bereich 3 der Frontstruktur integriert, allerdings wirkt das Zugelement zusätzlich versteifend bei Zugkräften in vertikaler Richtung oder z-Richtung, Diese Steifigkeit ist notwendig, wenn im oberen Bereich der Frontstruktur ein Schließmechanismus 4, wie beispielsweise ein Haubenschloss, eingebaut werden soll. Der Schließmechanismus wird bei Öffnung der Verkleidung für die Motorhaube oder einen Stauraum entriegelt und dabei Zugkräften ausgesetzt. Umgekehrt schnappt das Schließelement auf der Verkleidung in den in der Frontstruktur eingebauten Schließmechanismus ein, sodass auf den Schließmechanismus und dementsprechend auf die Frontstruktur keine großen Druckkräfte wirken. Somit ist eine zusätzliche Versteifung im oberen Bereich der Frontstruktur nicht unbedingt erforderlich.

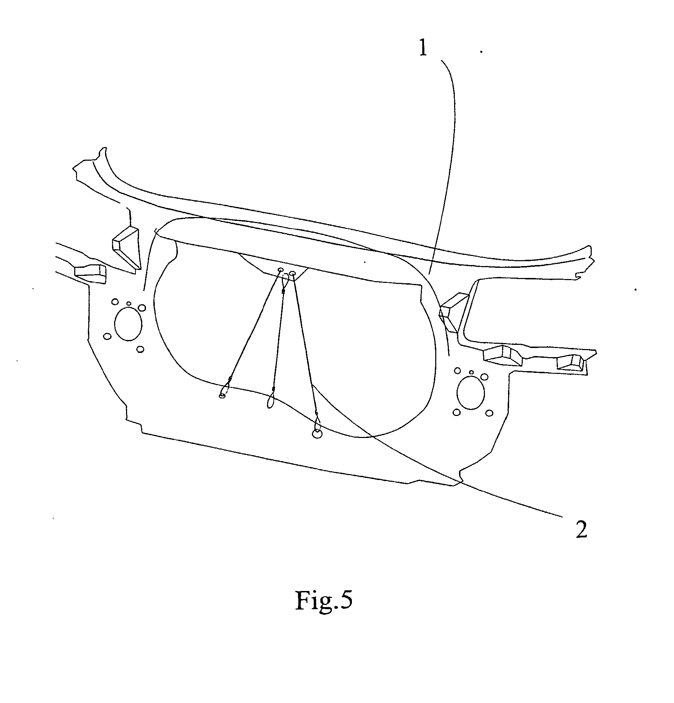

Fig. 5 stellt eine unbelastete Frontstruktur nach einem dritten Ausführungsbeispiel dar, in welchem eine Kombination einiger vorhergehender Zugelemente dargestellt ist, welche an verschiedenen Stellen der Frontstruktur befestigt sind oder in dieselbe integriert sind.

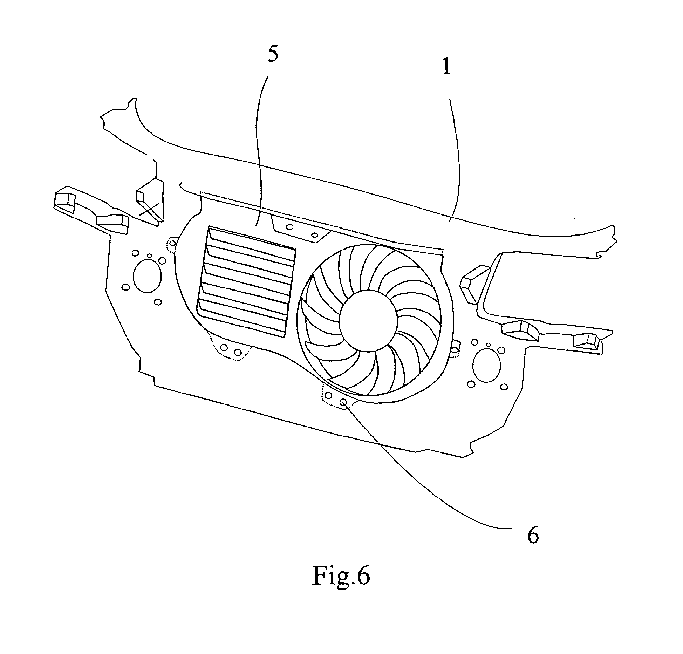

Fig. 6 stellt eine unbelastete Frontstruktur nach einem dritten Vergleichsbeispiel dar, in welchem die Frontendstruktur mit Einbauten versehen ist. Exemplarisch ist ein Kühlmodul dargestellt.

Die gleiche Funktion (steif auf Zug, weich auf Druck) kann auch mit in das Anbindungskonzept des Kühlmoduls integriert werden.

Statische Steifigkeitsuntersuchungen haben gezeigt, dass bei einer vertikalen Aussteifung des Frontendträgers durch eine Zugverbindung gleichen Materials die Zugsteifgkeit um das 3-fache zugenommen hat.

Bei Hüftaufprallversuchen der gleichen Konfiguration hat lediglich das Entfernen des Druckstabes ohne weitere Modifikation, z.B. der Motorhaube, sofort eine Verbesserung der Ergebnisse um 10% erbracht.

Insbesondere wurden quasistatische Zugversuche durchgeführt, die den gewünschten Effekt der Erfindung bestätigen.

Bei dem Frontendträger handelt es sich um ein Bauteil mit einem Bauteilgewicht von 5530g, aus PA GF 30 (Bayer Durethan BKV 30 H2.0) /3 mm und Stahl 0,8 mm. Es handelt sich um ein Prozesshybrid (Stahl und Kunststoff SG) wobei die Hauptanbindung des Zugelements an der Frontstruktur in X-Richtung (Richtung des sich bewegenden Fahrzeugs) erfolgt.

**Tabelle 1 VARIANTENBESCHREIBUNG**

| Variante | Beschreibung des Trägeraufbaus | Darstellung |
|---|---|---|
| 01 | Serienträger Audi B6 Cabrio; geprüft ohne Lüfterzarge mit steifem Schlossadapter | Fig. 3, Fig. 4 |
| 02 | Serienträger Audi 86 Cabrio; Lüfterzarge umlaufend 8x mit Frontendträger fest verschraubt; geprüft mit Original Schloss | Fig. 6 |
| 03 | Serienträger Audi B6 Cabrio; 3mm Stahlseil am Schloss und am unteren Querträger verschraubt (Y0); geprüft mit Original Schloss | Fig.1 |
| 04 | Serienträger Audi B6 Cabrio; 3mm Stahlseil 2x am unteren Querträger verschraubt und über Schloss umgeleitet; geprüft mit Original Schloss | Fig. 2 |

Variante 01 liegt allen weiteren Varianten zugrunde. Die Stahlblecheinleger des umspritzten Hybridträgers sind in Fig. 3 oder Fig. 4 nicht gekennzeichnet. Die Einleger verbinden die Kotflügelbänke oben, sowie die Längsträger unten.
Der untere Einleger ist für diese Variante erforderlich, da in diesem Bereich die Drehmomentabstützung des quer eingebauten Motors erfolgt.

Die Variante 02 entspricht der Einbausituation im Fahrzeug. Die Lüfterzarge 5 aus PA GF30 ist umlaufend an 8 Punkten 6 fest mit dem Frontendträger verschraubt

Bei Variante 03 wurde der obere Querträger mit dem unteren Querträger bei Y=0 mit einem handelsüblichen Stahlseil mit einem Durchmesser von 3mm verbunden.
Die Schlaufen an den Seilenden wurden oben an einer Nietmutter der Lüfterzargenanbindung und unten an einer Nietmutter der Drehmomentabstützung geschraubt.

Das Stahlseil wurde in Variante 04 zweimal am unteren Querträger angeschraubt und am oberen Querträger über die beiden mittleren Anschraubpunkte umgelenkt. Die Seile liegen somit nicht direkt in Richtung der Krafteinleitung. Um eine gleichmäßige Kraftverteilung auf beide Seiten zu gewährleisten, wurde das Seil an der oberen Befestigung beweglich geführt (Fig. 1). Die Verschraubung der Seilenden erfolgte an den beiden unteren Nietmuttern der Lüfterzargenbefestigung.
Der Prüfaufbau soll im folgenden kurz beschrieben werden. Die Frontstruktur, in diesem Versuch ein Frontendträger, wurde in Fahrzeuglage an den dem Realeinbau entsprechenden Stellen fest mit der Prüfvorrichtung verschraubt. Die Vorrichtung besteht aus einem Rahmen mit mehreren Verbindungspunkten, welche in Vertikalrichtung (Z-Richtung) linksseitig und rechtsseitig zur Kotflügelbank liegen und im unteren Bereich linksseitig und rechtsseitig zwischen Crashblock und Längsträger eingespannt sind.
Das Zugkraft wurde bei Variante 01 über einen steifen Schlossadapter bei den Varianten 02 bis 04 mittels einer Zugöse am Originalschloss eingeleitet.
Die Prüfkraft in Höhe von 1500N in positiver Z-Richtung greift in der Trägermitte (Koordinate Y=0 in einem rechtwinkeligen Koordinatensystem) an.
Die Kraft ist ausreichend groß gewählt, um eine Aussage über die Steifigkeit des Frontendträgers zu erhalten, ohne dass Verformungen, Risse etc. auftreten

An den in Fig. 1 gekennzeichneten Punkten werden die Messwerte, bei anliegender Vorkraft, bei Maximalbelastung, sowie nach erneutem Anlegen der Vorkraft aufgenommen.
Die maximale Verformung tritt bei Y=0 auf und errechnet sich aus den Messwerten 7-8
Die Steifigkeit errechnet sich aus der Differenz aus Prüfkraft und Vorkraft, geteilt durch die Differenz der Messwerte unter Prüfkraft und nach Entlastung.
Die Steifigkeit wird somit in Kraft pro Verschiebung mit der Einheit N/mm angegeben.

Die Steifigkeit der Schlossträger soll in einem Lastbereich von 800N/mm bis 2000N/mm liegen, wobei zu beachten ist, dass diese Anforderung sich auf ein komplett bestücktes Modul mit allen Anbauteilen bezieht. Das bedeutet aber nichts anderes, als dass die beschriebene Prüfung unter wesentlich ungünstigeren Bedingungen vorgenommen wurde und es somit durch das bestückte Modul zu einer wesentlichen Erhöhung der Werte für die Steifigkeit kommen wird.
In der Prüfung wurde nur die Zugprüfung durchgeführt, da sich jedoch die
Verformungen im linear elastischen Bereich befinden, kann für die Druckbelastung der gleiche Wert wie unter Zugbelastung angenommen werden.
In Tabelle 2 sind die aus den maximalen Durchbiegungen resultierenden Steifigkeiten aller vier Varianten gegenübergestellt.

**Tabelle 2**

| Variante | 01 | 02 | 03 | 04 |
|---|---|---|---|---|
| Abbildung | Fig. 3 Fig. 4 | Fig. 6 | Fig. 1 | Fig. 2 |
| Steifigkeit (N/mm) | 264 | 718 | 657 | 780 |

### Bezugszeichenliste

- 1.: Frontstruktur
- 2.: Zugelement
- 3.: oberer Bereich
- 4.: Schließmechanismus
- 5.: Lüfterzarge
- 6.: Anbindungspunkt
- 7.: Messpunkt
- 8.: Messpunkt
- 9.: Messpunkt
- 10.: Messpunkt
- 11.: Messpunkt
- 12.: Öffnung

## Patentansprüche

1. Frontstruktur (1) in einem Fahrzeug mit einem einen oberen Querträger und einen unteren Querträger umfassenden Frontendträger und mindestens einem Zugelement (2), welches im Wesentlichen in vertikaler Richtung zwischen dem oberen Querträger und dem unteren Querträger angeordnet ist, und welches bei einem Aufprall mit einer im Wesentlichen horizontal augerichteten Stosskraft die Zugsteifigkeit der Frontstruktur (1) erhöht, wobei im oberen Bereich der Frontstruktur ein Schließmechanismus (4) angeordnet ist, **gekennzeichnet dadurch, dass**
das mindestens eine Zugelement (2) im Wesentlichen keine eigene Biegesteifigkeit aufweist und derart angeordnet ist, dass die Zugkraft über einen steifen Schlossadapter oder mittels einer Zugöse am Schloss eingeleitet wird.

2. Frontstruktur nach Anspruch 1, **gekennzeichnet dadurch, dass** das mindestens eine Zugelement (2) als biegeschlaffer Draht, Seil, Band, Kette, Faserstrang oder Gewebeband ausgebildet ist.

3. Frontstruktur nach Anspruch 1,
**gekennzeichnet dadurch, dass**
das mindestens eine Zugelement (2) derart angeordnet ist, dass es bei einem Aufprall mit einer im Wesentlichen horizontal ausgerichteten, auf eine Aufprallsituation mit einem anderen Fahrzeug oder einem Hindernis zurückgehenden Stosskraft die Zugsteifigkeit der Frontstruktur erhöht.

4. Frontstruktur nach Anspruch 1,
**gekennzeichnet dadurch, dass** das
mindestens eine Zugelement (2) derart angeordnet ist, dass es bei einer im Wesentlichen vertikal nach unten ausgerichteten, durch einen Aufprall eines Fußgängers entstandenen Stosskraft ohne wesentlichen Widerstand nachgibt.

## Claims

1. A front structure (1) in a vehicle having a front end beam comprising an upper cross member and a lower cross member, and at least one tensile element (2), which is disposed substantially vertically between the upper cross member and the lower cross member, and which increases the tensile strength of the front structure (1) in the event of a collision with a substantially horizontally directed impact, a closing mechanism (4) being disposed in the upper region of the front structure,
**characterised in that** the at least one tensile element (2) has substantially no intrinsic bending strength and is disposed such that the tensile force is introduced via a rigid lock adapter or by means of a cable lug on the lock.

2. A front structure according to claim 1,
**characterised in that** the at least one tensile element (2) is designed as a limp wire, cable, tape, chain, fibre strand or fabric tape.

3. A front structure according to claim 1,
**characterised in that** the at least one tensile element (2) is disposed such that in the event of a collision with a substantially horizontally directed impact resulting from a collision with another vehicle or obstacle the tensile stiffness of the front structure is increased.

4. A front structure according to claim 1,
**characterised in that** the at least one tensile element (2) is disposed such that it yields without any substantial resistance in the event of a substantially vertically downwardly directed impact produced by a collision with a pedestrian.

## Revendications

1. Structure frontale (1) d'un véhicule comportant un support d'extrémité frontale avec une traverse supérieure et une traverse inférieure et au moins un élément de traction (2) dirigé pratiquement dans la direction verticale entre la traverse supérieure et la traverse inférieure, et qui en cas de collision avec une force de choc dirigée pratiquement horizontalement, augmente la rigidité en traction de la structure frontale (1), et
dans la zone supérieure de la structure frontale, il est prévu un mécanisme de fermeture (4),
**caractérisée en ce qu'**
au moins un élément de traction (2) ne présentant pratiquement pas de rigidité en flexion, propre est installé pour que la force de traction soit induite par une platine d'adaptateur, rigide ou par un oeillet de traction dans la platine.

2. Structure frontale selon la revendication 1,
**caractérisée en ce qu'**
au moins un élément de traction (2) est un câble sans flexion, un fil, un ruban, une chaîne, un cordon de fibres ou un ruban tissé.

3. Structure frontale selon la revendication 1,
**caractérisée en ce qu'**
au moins un élément de traction (2) est installé pour qu'en cas de collision avec une force de choc pratiquement horizontale, en cas de collision avec un autre véhicule ou avec un obstacle, la force du choc augmente la rigidité en traction de la structure frontale.

4. Structure frontale selon la revendication 1,
**caractérisée en ce qu'**
au moins un élément de traction (2) est installé pour qu'en cas de force de collision dirigée pratiquement verticalement vers le bas, résultant d'une collision avec un piéton, cet élément cède pratiquement sans opposer de résistance.
